# EUROPEAN PATENT APPLICATION

(11) **EP 4 447 165 A1**
(43) Date of publication of application: **16.10.2024**
(21) Application number: 22952193.5
(22) Date of filing: 25.07.2022
(51) Int. Cl.: H01M 4/62, H01M 10/0566

(54) **ELECTRODE SLURRY, ELECTRODE SHEET AND MANUFACTURING METHOD THEREFOR, SECONDARY BATTERY, AND ELECTRICAL DEVICE**

(71) Applicant: Contemporary Amperex Technology (Hong Kong) Limited, Central, Central And Western District (HK)
(72) Inventor: AI, Shaohua, Ningde, Fujian 352100 (CN); SUN, Chengdong, Ningde, Fujian 352100 (CN); ZHENG, Yi, Ningde, Fujian 352100 (CN); CHEN, Yu, Ningde, Fujian 352100 (CN); ZENG, Qi, Ningde, Fujian 352100 (CN); ZHANG, Yuxi, Ningde, Fujian 352100 (CN); ZHOU, Xin, Ningde, Fujian 352100 (CN)
(74) Representative: Kraus & Lederer PartGmbB
(86) International application number: PCT/CN2022/107633
(87) International publication number: WO 2024/020724

(57) **Abstract**

The present application discloses an electrode slurry, comprising an electrode active material, a binder composition and a solvent; the binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

## Description

### TECHNICAL FIELD

The present application relates to the field of secondary batteries, and more particularly to an electrode slurry, an electrode sheet, a preparation method thereof, a secondary battery and an electrical apparatus.

### BACKGROUND ART

The statements herein only provide background information related to the present application, and do not necessarily constitute a prior art.

An electrode slurry typically comprises a binder in an amount to provide bonding force between an electrode active material and a current collector. In conventional art, polyvinylidene fluoride (PVDF) is often used as the binder in the electrode slurry. For higher bonding performance, the molecular weight of PVDF generally needs to be maintained above 600,000. However, the addition of PVDF with higher molecular weight may cause electrode sheet to become brittle, and it is easy to crack at the stages of coating and winding, resulting in the decrease of qualified rate. Moreover, PVDF has adverse impacts on the environment, and there is an urgent need to find alternatives.

### SUMMARY OF THE INVENTION

According to various Examples of the present application, an electrode slurry, an electrode sheet, a preparation method thereof, a secondary battery and an electrical apparatus are provided.

In a first aspect of the present application, there is provided an electrode slurry comprising an electrode active material, a binder composition and a solvent;

The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

One or more of an epoxy resin, an acrylic-capped prepolymer and an acrylate-capped prepolymer are used as the thermally crosslinked polymer, which, together with the thermal crosslinking agent, forms a binder composition, and it is possible to replace the conventional PVDF binder and provide an electrode slurry with a certain viscosity to meet the requirement of electrode sheet preparation. The electrode slurry is environmentally friendly, the prepared electrode sheet has good performance, and is not easy to crack during processing.

In some embodiments, the binder composition is liquid at 25±0.5°C, and has a viscosity of ≥50000 mPa·s. The binder composition itself has a relatively high viscosity, so that the other components in the slurry have a relatively good bonding force thereamong, and it is possible to replace the conventional PVDF binder to realize the electrode sheet processing.

In some embodiments, the thermally crosslinked polymer comprises an epoxy resin, and the thermal crosslinking agent comprises one or more of an imidazole-based curing agent, an anhydride-based curing agent and an amine-based curing agent. A suitable combination of thermally crosslinked polymer and thermal crosslinking agent does not undergo crosslinking reaction at room temperature, and can provide enough viscosity before thermal crosslinking, so that electrode sheet processing can proceed smoothly, and as crosslinking has not occurred, the electrode sheet has relatively high flexibility, and is not easy to crack; and after thermal crosslinking, the bonding force and electrolyte solution resistance of the electrode sheet can be further improved.

In some embodiments, the imidazole-based curing agent comprises one or more of 2-ethyl-methylimidazole, 2,4-dimethylimidazole, 2-ethylimidazole, modified imidazole ThinkHard 90S and imidazole adduct ThinkHard23N.

In some embodiments, the anhydride-based curing agent comprises one or more of methyl tetrahydrophthalic anhydride and methyl hexahydrophthalic anhydride.

In some embodiments, the amine-based curing agent comprises isophorone diamine.

In some embodiments, the number average molecular weight of the epoxy resin is 400 Da-1600 Da; and optionally, the number average molecular weight of the epoxy resin is 550Da-1200Da. Proper molecular weight can provide sufficient bonding force before thermal crosslinking, and the flexibility is not so poor as to cause cracking during electrode sheet processing.

In some embodiments, the epoxy value of the epoxy resin is 0.04-0.6; optionally, the epoxy value of the epoxy resin is 0.18-0.36. Proper epoxy value enables a suitable reaction rate for thermal crosslinking, and the resulting thermally crosslinked product has good electrolyte solution resistance and flexibility.

In some embodiments, the epoxy resin comprises one or more of a bisphenol A type epoxy resin, a bisphenol F type epoxy resin and a dimeric acid type epoxy resin. Bisphenol A type epoxy resin, bisphenol F type epoxy resin and dimeric acid type epoxy resin are more suitable for the solutions of the present application, and have less impacts on the electrical performance of batteries.

In some embodiments, the thermally crosslinked polymer comprises an epoxy resin, and the epoxy resin and the thermal crosslinking agent are used in an amount ratio satisfying any one of the following conditions (1) to (3):
(1) the thermal crosslinking agent comprises an imidazole-based curing agent, and the mass ratio of the epoxy resin to the imidazole-based curing agent is 1: (0.02-0.05);
(2) the thermal crosslinking agent comprises an anhydride-based curing agent, and the mass ratio of the epoxy resin to the anhydride-based curing agent is 1: (0.08-0.45);
(3) the thermal crosslinking agent comprises an amine-based curing agent, and the mass ratio of the epoxy resin to the amine-based curing agent is 1: (0.04-0.22).

A proper amount ratio enables a thorough thermal crosslinking reaction and a suitable crosslinking density, and avoids a too low crosslinking density and poor electrolyte solution resistance caused by incomplete reaction; and at the same time, it also prevents excessive raw materials from being left over, resulting in small molecule raw materials remaining on the electrode sheet to affect bonding strength, or migrating into the electrolyte solution to affect the electrical performance of the battery.

In some embodiments, the thermally crosslinked polymer comprises one or more of an acrylic-capped prepolymer and an acrylate-capped prepolymer, and the thermal crosslinking agent comprises one or more of azobisisobutyronitrile and benzoyl peroxide. A suitable combination of thermally crosslinked polymer and thermal crosslinking agent does not undergo crosslinking reaction at room temperature, and can provide enough viscosity before thermal crosslinking, so that electrode sheet processing can proceed smoothly, and as crosslinking has not occurred, the electrode sheet has relatively high flexibility, and is not easy to crack; and after thermal crosslinking, the bonding force and electrolyte solution resistance of the electrode sheet can be further improved.

In some embodiments, the thermal crosslinking agent is used in an amount of 0.1%-1% by mass of the thermally crosslinked polymer. A proper amount ratio enables a thorough thermal crosslinking reaction and a suitable crosslinking density, and avoids a too low crosslinking density and poor electrolyte solution resistance caused by incomplete reaction; and at the same time, it can also avoid excessive free radicals generated by excessive addition, which results in a low molecular weight of the product, and affects the bonding performance and electrolyte solution resistance of the thermally crosslinked product.

In some embodiments, the number average molecular weights of the acrylic-capped prepolymer and the acrylate-capped prepolymer are independently 2000 Da-10000 Da, respectively; and optionally, the number average molecular weights of the acrylic-capped prepolymer and the acrylate-capped prepolymer are independently 3000Da-6000Da, respectively. Proper molecular weight can provide sufficient bonding force before thermal crosslinking, and the flexibility is not so poor as to cause cracking during electrode sheet processing.

In some embodiments, the acrylic-capped prepolymer comprises one or more of an acrylic-capped polyurethane prepolymer, an acrylic-capped polyester prepolymer and an acrylic-capped silicone prepolymer.

In some embodiments, the acrylate-capped prepolymer comprises one or more of an acrylate-capped polyurethane prepolymer, an acrylate-capped polyester prepolymer and an acrylate-capped silicone prepolymer.

In some embodiments, the solvent comprises one or more of ethanol, ethyl acetate and butyl acetate. The binder composition of the present application can be dissolved and slurried by using solvents with low boiling point and low toxicity, such as ethanol and ethyl acetate, so that the energy consumption of drying is greatly reduced, and the environmental pollution caused by highly toxic solvents such as N-methyl pyrrolidone (NMP) is also avoided.

In a second aspect of the present application, there is provided an electrode sheet, comprising a current collector and an active layer arranged on at least one side of the current collector, wherein the active layer is prepared by drying a raw material comprising the electrode slurry described in one or more of the aforementioned embodiments. After the aforementioned slurry is dried, it has sufficient bonding force, so that the electrode sheet can be subjected to subsequent winding processing and other processes, and as the binder composition is not crosslinked and cured at the time, the electrode sheet has good flexibility, which can greatly reduce the problem of electrode sheet cracking that is likely to occur during winding processing in conventional art.

In a third aspect of the present application, there is provided an electrode sheet, comprising a current collector and an active layer arranged on at least one side of the current collector, wherein the active layer comprises an electrode active material and a binder composition;

The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

In some embodiments, the binder composition is used in an amount of 0.8%-3.0% by mass of the active layer. The use of an appropriate amount of the binder composition can provide sufficient bonding force without causing too much adverse effects on the energy density of the battery.

In some embodiments, the electrode sheet comprises an insulating layer, which comprises the binder composition, and which is provided between the current collector and the active layer. By introducing the binder composition of the present application as the insulating layer of the electrode sheet, not only combustion or even explosion caused by short circuit of the battery can be avoided, thereby effectively improving the safety of the battery, but also the introduction of the insulating layer has no significantly negative effects on the flexibility of the electrode sheet, and the processability of the electrode sheet is not reduced.

In a fourth aspect of the present application, there is provided a preparation method of an electrode sheet, comprising the following steps:
Providing a current collector, coating the electrode slurry described in one or more of the aforementioned embodiments on at least one side of the current collector, drying and pressing.

In some embodiments, the drying is at a temperature of 30°C-70°C. An appropriate drying temperature is enough to remove the solvent in the slurry, and does not cause thermal crosslinking reaction between the thermally crosslinked polymer and the thermal crosslinking agent, so that the binder composition in the electrode sheet remains in a relatively high flexible state before the battery cell is oven dried, and the electrode sheet cracking during winding processing is avoided.

In a fifth aspect of the present application, there is provided a secondary battery, comprising the electrode sheet described in one or more of the aforementioned embodiments.

In a sixth aspect, there is provided a preparation method of a secondary battery, comprising the following steps:
Winding a positive electrode sheet, a separator and a negative electrode sheet to obtain a battery cell, oven drying the battery cell at 95°C-105°C to obtain a dry battery cell, assembling the dry battery cell and injecting an electrolyte solution;
Wherein at least one of the positive electrode sheet and the negative electrode sheet is the electrode sheet described in one or more of the aforementioned embodiments.

After winding to obtain the battery cell, it is oven dried at a suitable temperature, which can not only further remove the water in the battery cell, but also enable thermal crosslinking reaction of the binder composition to form a crosslinked network with an appropriate density, thereby further improving the bonding and electrolyte solution resistance of the electrode sheet.

In a seventh aspect of the present application, there is provided a battery module, comprising the aforementioned secondary battery.

In an eighth aspect of the present application, there is provided a battery pack, comprising the aforementioned battery module.

In a ninth aspect of the present application, there is provided an electrical apparatus, comprising one or more of the aforementioned secondary battery, battery module and battery pack.

Details of one or more Examples of the present application are set forth in the drawings and description below. Other features, objects and advantages of the present application will become apparent from the specification, drawings and claims.

### DESCRIPTION OF DRAWINGS

In order to better describe and illustrate those Examples or demonstrations of the invention disclosed herein, reference may be made to one or more drawings. Additional details or demonstrations used to describe the drawings should not be considered as limiting the scope of any of the disclosed invention, currently described Examples or demonstrations, and those best modes of the invention currently understood.
Fig. 1 is a schematic view of a secondary battery according to an embodiment of the present application.
Fig. 2 is an exploded view of the secondary battery according to an embodiment of the present application shown in Fig. 1.
Fig. 3 is a schematic view of a battery module according to an embodiment of the present application.
Fig. 4 is a schematic view of a battery pack according to an embodiment of the present application.
Fig. 5 is an exploded view of the battery pack according to an embodiment of the present application shown in Fig. 4.
Fig. 6 is a schematic view of an electrical apparatus according to an embodiment of the present application, in which a secondary battery is used as a power source.

### Description of reference numerals:

1: Battery pack; 2: Upper box; 3: Lower box; 4: Battery module; 5: Secondary battery; 51: Case; 52: Electrode assembly; 53: Cover plate; 6: Electrical apparatus.

### DETAILED DESCRIPTION

In order to make the objects, technical solutions and advantages of the present application clearer, the present application will be described in further detail below in conjunction with the drawings and Examples. It should be understood that specific Examples described herein are intended only to explain the present application, but not to limit the present application.

Unless otherwise defined, all technical and scientific terms used herein have the same meanings as commonly understood by those skilled in the technical field of the present application. The terms used herein in the specification of the present application are only for the purpose of describing specific Examples, and are not intended to limit the present application. The term "and/or" as used herein includes any and all combinations of one or more related items listed.

The electrode active material layer of a secondary battery typically comprises polyvinylidene fluoride (PVDF) binder to enhance the bonding forces between the electrode active materials and between the active material layer and current collector layer. In order to ensure enough bonding force, the molecular weight of PVDF often needs to be larger; however, with the increase of the molecular weight of PVDF, the binder force is enhanced, yet the flexibility of the electrode sheet is greatly reduced, which easily cause cracking during electrode slurry coating and electrode sheet winding processing, greatly reducing the qualified rate. Moreover, N-methyl pyrrolidone (NMP) which has higher toxicity and higher boiling point is required to dissolve PVDF, especially PVDF with large molecular weight, and therefore, the subsequent electrode sheet drying requires a large energy consumption, the volatilization of the solvent will cause greater pollution to the environment, and the recovery cost is also higher.

In order to solve the above problems, in the first aspect of the present application, there is provided an electrode slurry comprising an electrode active material, a binder composition and a solvent;

The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

One or more of an epoxy resin, an acrylic-capped prepolymer and an acrylate-capped prepolymer are used as the thermally crosslinked polymer, which, together with the thermal crosslinking agent, forms a binder composition, and it is possible to provide an electrode slurry with a certain viscosity to meet the viscosity requirement of electrode sheet preparation, and as the binder composition is not polymerized at room temperature, the prepared electrode sheet is more flexible, and the cracking of the electrode sheet during coating and winding processing can be effectively avoided. Further, after winding to obtain the battery cell, crosslinking of the thermally crosslinked polymer can be achieved while heating and removing water to obtain a dry battery cell, thus imparting higher bonding force and electrolyte solution resistance to the active layer. The electrode slurry is environmentally friendly, and the disadvantage of cracking during electrode sheet processing in conventional art can be effectively solved.

In some embodiments, the binder composition is liquid at 25±0.5°C, and the viscosity is ≥50000 mPa·s; and optionally, the viscosity of the binder composition at 25±0.5°C can be, for example, 52000 mPa·s, 54000 mPa·s, 56000 mPa·s, 58000 mPa·s, 60000 mPa·s.... The binder composition itself has a relatively high viscosity, so that the other components in the slurry have a relatively good bonding force thereamong, and it is possible to replace the conventional PVDF binder to realize the electrode sheet processing.

In some embodiments, the thermally crosslinked polymer comprises an epoxy resin, and the thermal crosslinking agent comprises one or more of an imidazole-based curing agent, an anhydride-based curing agent and an amine-based curing agent. A suitable combination of thermally crosslinked polymer and thermal crosslinking agent does not undergo crosslinking reaction at room temperature, and can provide enough viscosity before thermal crosslinking, so that electrode sheet processing can proceed smoothly, and as crosslinking has not occurred, the electrode sheet has relatively high flexibility, and is not easy to crack; and after thermal crosslinking, the bonding force and electrolyte solution resistance of the electrode sheet can be further improved.

In some embodiments, the imidazole-based curing agent comprises one or more of 2-ethyl-4-methylimidazole, 2,4-dimethylimidazole, 2-ethylimidazole, modified imidazole ThinkHard 90S and imidazole adduct ThinkHard 23N.

In some embodiments, the anhydride-based curing agent comprises one or more of methyl tetrahydrophthalic anhydride and methyl hexahydrophthalic anhydride.

In some embodiments, the amine-based curing agent comprises isophorone diamine.

In some embodiments, the number average molecular weight of the epoxy resin is 400 Da-1600 Da; and optionally, the number average molecular weight of the epoxy resin is 550Da-1200Da. The number average molecular weight of the epoxy resin may also be, for example, 600 Da, 800 Da, 1000 Da, 1200 Da, 1400 Da, 1600 Da or 1800 Da. Proper molecular weight can provide sufficient bonding force before thermal crosslinking, and the flexibility is not so poor as to cause cracking during electrode sheet processing.

In some embodiments, the epoxy value of the epoxy resin is 0.04-0.6; optionally, the epoxy value of the epoxy resin is 0.18-0.36. The epoxy value of the epoxy resin may also be, for example, 0.1, 0.2, 0.3, 0.4 and 0.5. Proper epoxy value enables a suitable reaction rate for thermal crosslinking, and the resulting thermally crosslinked product has good electrolyte solution resistance and flexibility.

In some embodiments, the epoxy resin comprises one or more of bisphenol A type epoxy resin, bisphenol F type epoxy resin and dimeric acid type epoxy resin. Bisphenol A type epoxy resin, bisphenol F type epoxy resin and dimeric acid type epoxy resin are more suitable for the solutions of the present application, and have less impacts on the electrical performance of batteries.

In some embodiments, the thermally crosslinked polymer comprises an epoxy resin, and the epoxy resin and the thermal crosslinking agent are used in an amount ratio satisfying any one of the following conditions (1) to (3):
(1) The thermal crosslinking agent comprises an imidazole-based curing agent, the mass ratio of the epoxy resin to the imidazole-based curing agent is 1:(0.02-0.05); and the mass ratio of the epoxy resin to the imidazole-based curing agent may also be, for example, 1:0.03 or 1:0.04.
(2) The thermal crosslinking agent comprises an anhydride-based curing agent, the mass ratio of the epoxy resin to the anhydride-based curing agent is 1: (0.08-0.45); and the mass ratio of the epoxy resin to the anhydride-based curing agent may also be, for example, 1:0.1, 1:0.2, 1:0.3 or 1: 0.4;
(3) The thermal crosslinking agent comprises an amine-based curing agent, the mass ratio of the epoxy resin to the amine-based curing agent is 1:(0.04-0.22); and the mass ratio of the epoxy resin to the amine-based curing agent may also be, for example, 1:0.05, 1:0.1, 1:0.15 or 1: 0.2.

A proper amount ratio enables a thorough thermal crosslinking reaction and a suitable crosslinking density, and avoids a too low crosslinking density and poor electrolyte solution resistance caused by incomplete reaction; and at the same time, it also prevents excessive raw materials from being left over, resulting in small molecule raw materials remaining on the electrode sheet to affect bonding strength, or migrating into the electrolyte solution to affect the electrical performance of the battery.

In some embodiments, the thermally crosslinked polymer comprises one or more of an acrylic-capped prepolymer and an acrylate-capped prepolymer, and the thermal crosslinking agent comprises one or more of azobisisobutyronitrile and benzoyl peroxide. A suitable combination of thermally crosslinked polymer and thermal crosslinking agent does not undergo crosslinking reaction at room temperature, and can provide enough viscosity before thermal crosslinking, so that electrode sheet processing can proceed smoothly, and as crosslinking has not occurred, the electrode sheet has relatively high flexibility, and is not easy to crack; and after thermal crosslinking, the bonding force and electrolyte solution resistance of the electrode sheet can be further improved. It can be understood that azobisisobutyronitrile and benzoyl peroxide are commonly used initiators for free radical polymerization reactions, but here they are also regarded as thermal crosslinking agents in order to promote the occurrence of crosslinking reaction at a certain temperature.

In some embodiments, the thermal crosslinking agent is used in an amount of 0.1%-1% by mass of the thermally crosslinked polymer. The thermal crosslinking agent can also be used in an amount of 0.2%, 0.3%, 0.4%, 0.5%, 0.6%, 0.7%, 0.8% or 0.9% by mass of the thermally crosslinked polymer. A proper amount ratio enables a thorough thermal crosslinking reaction and a suitable crosslinking density, and avoids a too low crosslinking density and poor electrolyte solution resistance caused by incomplete reaction; and at the same time, it can also avoid excessive free radicals generated by excessive addition, which results in a low molecular weight of the product, and affects the bonding performance and electrolyte solution resistance of the thermally crosslinked product.

In some embodiments, the number average molecular weights of the acrylic-capped prepolymer and the acrylate-capped prepolymer are independently 2000 Da-10000 Da, respectively; and optionally, the number average molecular weights of the acrylic-capped prepolymer and the acrylate-capped prepolymer are independently 3000Da-6000Da, respectively. The number average molecular weights of the acrylic-capped prepolymer and the acrylate-capped prepolymer can also independently be, for example, 2500 Da, 3000 Da, 3500 Da, 4000 Da, 4500 Da, 5000 Da, 5500 Da, 6000 Da, 6500 Da, 7000 Da, 7500 Da, 8000 Da, 8500 Da, 9000 Da or 9500 Da, respectively. Proper molecular weight can provide sufficient bonding force before thermal crosslinking, and the flexibility is not so poor as to cause cracking during electrode sheet processing.

In some embodiments, the acrylic-capped prepolymer comprises one or more of an acrylic-capped polyurethane prepolymer, an acrylic-capped polyester prepolymer and an acrylic-capped silicone prepolymer.

In some embodiments, the acrylate-capped prepolymer comprises one or more of an acrylate-capped polyurethane prepolymer, an acrylate-capped polyester prepolymer and an acrylate-capped silicone prepolymer.

In some embodiments, the solvent comprises one or more of ethanol, ethyl acetate and butyl acetate. The binder composition of the present application can be dissolved and slurried by using solvents with low boiling point and low toxicity, such as ethanol and ethyl acetate, so that the energy consumption of drying is greatly reduced, and the environmental pollution caused by highly toxic solvents such as N-methyl pyrrolidone (NMP) is also avoided.

In the second aspect of the present application, there is provided an electrode sheet, comprising a current collector and an active layer arranged on at least one side of the current collector, wherein the active layer is prepared by drying a raw material comprising the electrode slurry described in one or more of the aforementioned embodiments. After the aforementioned slurry is dried, it has sufficient bonding force, so that the electrode sheet can be subjected to subsequent winding processing and other processes, and as the binder composition is not crosslinked and cured at the time, the electrode sheet has good flexibility, which can greatly reduce the problem of electrode sheet cracking that is likely to occur during winding processing in conventional art.

In the third aspect of the present application, there is provided an electrode sheet, comprising a current collector and an active layer arranged on at least one side of the current collector, wherein the active layer comprises an electrode active material and a binder composition;

The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

In some embodiments, the binder composition is used in an amount of 0.8%-3.0% by mass of the active layer. The binder composition can also be used in an amount of, for example, 1%, 1.5%, 2% or 2.5% by mass of the active layer. The use of an appropriate amount of the binder composition can provide sufficient bonding force without causing too much adverse effects on the energy density of the battery.

In some embodiments, the electrode sheet comprises an insulating layer, which comprises the binder composition, and which is provided between the current collector and the active layer. By introducing the binder composition of the present application as the insulating layer of the electrode sheet, not only combustion or even explosion caused by short circuit of the battery can be avoided, thereby effectively improving the safety of the battery, but also the introduction of the insulating layer has no significantly negative effects on the flexibility of the electrode sheet, and the processability of the electrode sheet is not reduced.

It can be understood that the aforementioned "the insulating layer is arranged between the current collector and the active layer" may include one or more of the following situations:
(1) provided between the positive electrode current collector and the negative electrode active layer;
(2) provided between the positive electrode current collector and the positive electrode active layer;
(3) provided between the negative electrode current collector and the positive electrode active layer;
and (4) provided between the negative electrode current collector and the negative electrode active layer.

In the fourth aspect of the present application, there is provided a preparation method of an electrode sheet, comprising the following steps:
Providing a current collector, coating the electrode slurry described in one or more of the aforementioned embodiments on at least one side of the current collector, drying and pressing.

In some embodiments, the drying is at a temperature of 30°C-70°C. The drying can also be at a temperature of, for example, 40°C, 50°C or 60°C. An appropriate drying temperature is enough to remove the solvent in the slurry, and does not cause thermal crosslinking reaction between the thermally crosslinked polymer and the thermal crosslinking agent, so that the binder composition in the electrode sheet remains in a relatively high flexible state before the battery cell is oven dried, and the electrode sheet cracking during winding processing is avoided.

In the fifth aspect of the present application, there is provided a secondary battery, comprising the electrode sheet described in one or more of the aforementioned embodiments.

In the sixth aspect, there is provided a preparation method of a secondary battery, comprising the following steps:
Winding a positive electrode sheet, a separator and a negative electrode sheet to obtain a battery cell, oven drying the battery cell at 95°C-105°C to obtain a dry battery cell, assembling the dry battery cell and injecting an electrolyte solution; the oven drying temperature can also be, for example, 97°C, 100°C or 103°C;
Wherein at least one of the positive electrode sheet and the negative electrode sheet is the electrode sheet described in one or more of the aforementioned embodiments.

After winding to obtain the battery cell, it is oven dried at a suitable temperature, which can not only further remove the water in the battery cell, but also enable thermal crosslinking reaction of the binder composition to form a crosslinked network with an appropriate density, thereby further improving the bonding and electrolyte solution resistance of the electrode sheet.

In the seventh aspect of the present application, there is provided a battery module, comprising the aforementioned secondary battery.

In the eighth aspect of the present application, there is provided a battery pack, comprising the aforementioned battery module.

In the ninth aspect of the present application, there is provided an electrical apparatus, comprising one or more of the aforementioned secondary battery, battery module and battery pack.

Additionally, the secondary battery, battery module, battery pack and electrical apparatus of the present application will be described below with appropriate reference to the accompanying drawings.

In an embodiment of the present application, there is provided a secondary battery.

Generally, the secondary battery comprises a positive electrode sheet, a negative electrode sheet, an electrolyte, and a separator. During charging and discharging process of the battery, active ions are intercalated and deintercalated back and forth between the positive electrode sheet and the negative electrode sheet. The electrolyte serves to conduct ions between the positive electrode sheet and the negative electrode sheet. The separator is provided between the positive electrode sheet and the negative electrode sheet, and mainly functions to prevent a short circuit between the positive electrode and the negative electrode while allowing ions to pass through.

At least one of the positive electrode sheet and the negative electrode sheet of the secondary battery provided by the present application is the electrode sheet provided by the second or third aspect of the present application and comprising the binder composition in the electrode slurry of the first aspect. For example, the positive electrode sheet utilizes the electrode sheet provided by the second or third aspect of the present application, and the negative electrode sheet utilizes a conventional negative electrode sheet, or the negative electrode sheet utilizes the electrode sheet provided by the second or third aspect of the present application, and the positive electrode sheet utilizes a conventional positive electrode sheet, or both of them utilize the electrode sheet provided by the second or third aspect of the present application. The structure and material of the aforementioned conventional positive electrode sheet or negative electrode sheet are as follows:

### Positive electrode sheet

The positive electrode sheet comprises a positive electrode current collector and a positive electrode film layer arranged on at least one surface of the positive electrode current collector, and the positive electrode film layer comprises the positive electrode active material of the first aspect of the present application.

As an example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may comprise a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may comprise at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. It is possible to use only one of these positive electrode active materials alone, or to use two or more in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi0_{.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode sheet can be prepared by dispersing the components for preparing the positive electrode sheet, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode sheet.

### Negative electrode sheet

The negative electrode sheet comprises a negative electrode current collector and a negative electrode film layer arranged on at least one surface of the negative electrode current collector, wherein the negative electrode film layer comprises a negative electrode active material.

As an example, the negative electrode current collector has two opposite surfaces in its own thickness direction, and the negative electrode film layer is arranged on either one or both of the two opposite surfaces of the negative electrode current collector.

In some embodiments, the negative electrode current collector can be a metal foil or a composite current collector. For example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode active material may be a negative electrode active material for batteries well known in the art. As an example, the negative electrode active material may comprise at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. It is possible to use only one of these negative electrode active materials alone, or to use two or more in combination.

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other auxiliaries, for example, a thickener (e. g., sodium carboxymethyl cellulose (CMC-Na)) and the like.

In some embodiments, the negative electrode sheet can be prepared by dispersing the components for preparing the negative electrode sheet, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode sheet.

### Electrolyte

The electrolyte serves to conduct ions between the positive electrode sheet and the negative electrode sheet. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### Separator

In some embodiments, the secondary battery further comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode sheet, the negative electrode sheet, and the separator can be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft pack can be plastic, and as plastic, polypropylene, polybutylene terephthalate, and polybutylene succinate can be cited.

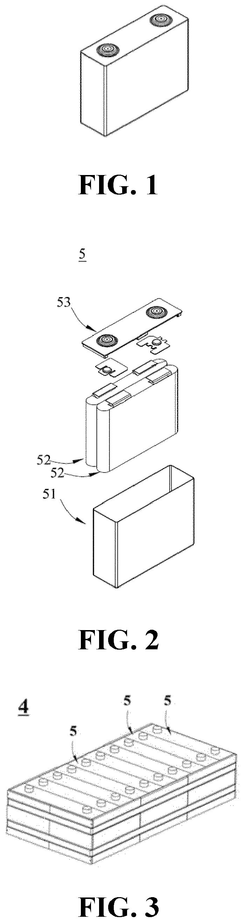

The present application has no particular limitation on the shape of the secondary battery, which can be cylindrical, square or any other shape. For example, Fig. 1 shows a secondary battery 5 with a square structure as an example.

In some embodiments, referring to Fig. 2, the outer package may comprise a case 51 and a cover plate 53. Here, the case 51 may comprise a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 contained in the secondary battery 5 may be one or more, which can be selected by those skilled in the art according to specific actual requirements.

In some embodiments, the secondary batteries may be assembled into a battery module, and the number of the secondary batteries contained in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 may be sequentially arranged along a length direction of the battery module 4. Of course, any other arrangements are also possible. The plurality of secondary batteries 5 may further be fixed by fasteners.

Optionally, the battery module 4 can further comprise a case having an accommodating space, in which the plurality of secondary batteries 5 are accommodated.

In some embodiments, the above-mentioned battery module may further be assembled into a battery pack, the number of battery module contained in the battery pack may be one or more, and the specific number can be selected by those skilled in the art according to the use and capacity of the battery pack.

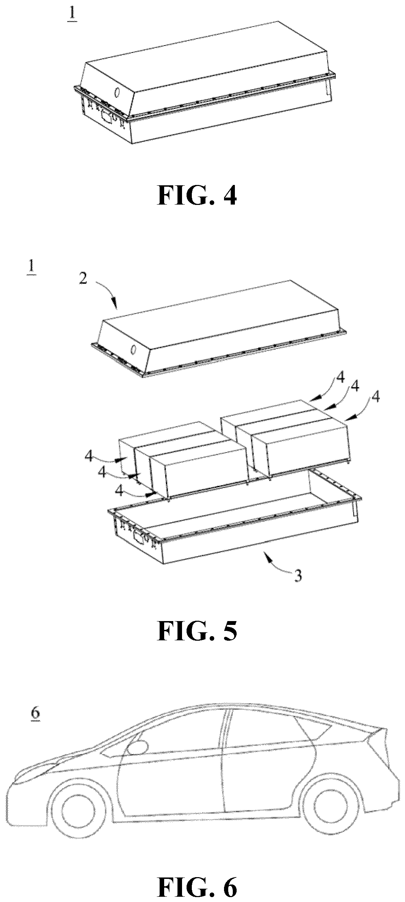

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, the upper box 2 can cover the lower box 3 to form a closed space for accommodating the battery modules 4. The plurality of battery modules 4 may be arranged in the battery box in any manner.

Additionally, the present application further provides an electrical apparatus, comprising at least one of the secondary battery, battery module, or battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device, an electric vehicle, an electric train, a ship, a satellite, and an energy storage system, etc. Here, the mobile device may be, for example, a mobile phone, a laptop, etc. The electric vehicle may be, for example, an all-electric vehicle, a hybrid electric vehicle, a plug-in hybrid electric vehicle, an electric bicycle, an electric scooter, an electric golf cart, an electric truck, etc., but is not limited thereto.

For the electrical apparatus, the secondary battery, the battery module, or the battery pack can be selected according to its use requirements.

Fig. 6 is an example of an electrical apparatus 6. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Example 1

### (1) Preparation of positive electrode sheet

100 g of dimeric acid type epoxy resin ERS-172L with a number average molecular weight of 580Da and an epoxy value of 0.34 (manufacturer: Shanghai Zhongsi Industry Co.,Ltd.) and 14.6g of isophorone diamine (IPDA) were stirred uniformly to obtain a binder composition with a viscosity of 55000mPa·s at 25±0.5°C; the binder composition, a positive electrode powder lithium iron phosphate, a conductive carbon black and a dispersant PVP (polyvinyl pyrrolidone) were mixed in a dry weight ratio of 2:97.5:1:0.5, ethanol was added as a solvent for stirring and slurrying, the solid content was controlled to be 66%, the material was coated on an aluminium foil, then oven dried at 50°C, and then cold pressed to obtain the positive electrode sheet;

### (2) Preparation of negative electrode sheet

An artificial graphite, a conductive agent acetylene black, a binder SBR (styrene butadiene rubber) and a thickener sodium carboxymethyl cellulose (CMC) in a weight ratio of 95:2:2:1 were fully stirred and mixed uniformly in deionized water-based aqueous system, and then the material was coated on a copper foil, oven dried and cold pressed to obtain the negative electrode sheet;

### (3) Preparation of dry battery cell

A PE (polyethylene) porous polymer film was used as a separator and wound with the positive and negative electrode sheets to obtain a battery cell, which was then oven dried at 100°C, and the binder composition was crosslinked to obtain the dry battery cell;

### (4) Preparation of battery

1mol/L of LiPF₆ solution was used as the electrolyte solution, and the solvent used in the solution was a mixture of ethylene carbonate (EC), diethyl carbonate (DEC) and dimethyl carbonate (DMC) in a volume ratio of 1:1:1, and 2.0% of a film-forming aid VC (vinylene carbonate) was additionally added;

The dry battery cell prepared in step (3) was assembled in an environment with an ambient humidity of less than 2%, the electrolyte solution was injected, and after formation and capacity sorting, a soft-packed lithium-ion secondary battery with a capacity of 5 Ah and 2.5 V-3.65 V was obtained.

### Example 2

Consistent substantially with Example 1, except that the epoxy resin in step (1) was E51 epoxy resin with a number average molecular weight of 392Da and an epoxy value of 0.51, and the resulting binder composition had a viscosity of 6000 mPa·s.

### Example 3

Consistent substantially with Example 1, except that the epoxy resin in step (1) was epoxy resin 0194 (manufacturer: Nantong Xingchen Synthetic Material Company Limited) with a number average molecular weight of 1700 Da and an epoxy value of 0.12, and the resulting binder composition was a solid.

### Example 4

Consistent substantially with Example 1, except that the temperature of oven drying-crosslinking in step (3) was 85°C.

### Example 5

Consistent substantially with Example 1, except that the temperature of oven drying-crosslinking in step (3) was 108°C.

### Example 6

Consistent substantially with Example 1, except that in step (1), 14.6 g of isophorone diamine was replaced by 23.2 g of methyl hexahydrophthalic anhydride (MeH-HPA).

### Example 7

Substantially the same as Example 1, except that in step (1), 14.6 g of isophorone diamine was replaced by 2 g of 2-ethyl-4-methylimidazole.

### Example 8

Consistent substantially with Example 7, except that the amount of 2-ethyl-4-methylimidazole used was 1 g.

### Example 9

Consistent substantially with Example 7, except that the amount of 2-ethyl-4-methylimidazole used was 8 g.

### Example 10

Consistent substantially with Example 7, except that in step (1), the dimeric acid type epoxy resin ERS-172L was replaced by dimeric acid type epoxy resin ERS-172 with equal mass, the number average molecular weight became 1200 Da, the epoxy value became 0.17, and the resulting binder composition had a viscosity of 80000mPa·s.

### Example 11

Substantially the same as Example 1, except that in step (1), the epoxy resin E44 was replaced by polyester acrylate 6313-100 (number average molecular weight was 3000Da, manufacturer: Changxing Chemical) with equal mass, 14.6 g of isophorone diamine was replaced by 0.3 g of azobisisobutyronitrile (AIBN), and the resulting binder composition had a viscosity of 120000mPa·s.

### Example 12

Consistent substantially with Example 11, except that in step (1), the polyester acrylate 6313-100 was replaced by polyester acrylate 6311-100 (manufacturer: Changxing Chemical) with equal mass, the number average molecular weight was 2800 Da, and the resulting binder composition had a viscosity of 45000 mPa·s.

### Example 13

Consistent substantially with Example 11, except that in step (1), the polyester acrylate 6313-100 was replaced by polyester acrylate 61992 (manufacturer: Changxing Chemical) with equal mass, the number average molecular weight was 5000 Da, and the resulting binder composition had a viscosity of 200000mPa·s.

### Example 14

### (1) Preparation of positive electrode sheet

Polyvinylidene fluoride, lithium iron phosphate positive electrode powder, conductive carbon black and dispersant PVP were mixed in a dry weight ratio of 2:97.5:1:0.5, N-methyl pyrrolidone was added as a solvent for stirring and slurrying, the solid content was controlled to be 66%, and the material was coated on an aluminium foil, oven dried and cold pressed to obtain the positive electrode sheet;

### (2) Preparation of negative electrode sheet

100 g of dimeric acid type epoxy resin ERS-172L with a number average molecular weight of 580Da and an epoxy value of 0.34 and 2 g of 2-ethyl-4-methylimidazole were stirred uniformly to obtain a binder composition with a viscosity of 70000 mPa s at 25±0.5°C; artificial graphite, conductive agent acetylene black and the binder composition in a weight ratio of 96:2:2 were fully stirred and mixed uniformly in an ethanol system, then the material was coated on a copper foil, and then oven dried at 50°C and cold pressed to obtain the negative electrode sheet;

### (3) Preparation of dry battery cell

A PE (polyethylene) porous polymer film was used as a separator and wound with the positive and negative electrode sheets to obtain a battery cell, which was then dried in vacuum at 100°C to remove water, and the dry battery cell was obtained;

### (4) Preparation of battery

1mol/L of LiPF₆ solution was used as the electrolyte solution, and the solvent used in the solution was a mixture of ethylene carbonate (EC), diethyl carbonate (DEC) and dimethyl carbonate (DMC) in a volume ratio of 1:1:1, and 2.0% of a film-forming aid VC (vinylene carbonate) was additionally added;

The dry battery cell prepared in step (3) was assembled in an environment with an ambient humidity of less than 2%, the electrolyte solution was injected, and after formation and capacity sorting, a soft-packed lithium-ion secondary battery with a capacity of 5 Ah and 2.5 V-3.65 V was obtained.

### Comparative example 1

Consistent substantially with Example 1, except that in step (1), polyvinylidene fluoride with equal mass was used in place of the binder composition, and N-methyl pyrrolidone was used as the solvent, the positive electrode slurry was coated on the aluminum foil, and then oven dried at 130°C.

The following characterization tests were carried out on the positive electrode sheets and the secondary batteries prepared in the above-mentioned Examples and Comparative example, respectively:

### 1. Electrode sheet testing

### (1) Appearance after cold pressing

The cold-pressed electrode sheet was taken and folded in half, a 1Kg rolling wheel was used to roll it back and forth 3 times at the folded place, it was opened, and then it was checked whether there is crack and powder falling at the inner circle crease;

### (2) Electrolyte solution resistance

In an environment with a humidity of ≤2% and an ambient temperature of 23±2°C, about 1 g of vacuum dried electrode sheet was taken and accurately weighed as m0, and then it was soaked in 50 g of the standard electrolyte solution prepared in step (4) of Example 1, sealed and closed, and then aged in an oven at 60°C for 168 h. After the specified time, whether the electrode sheet fell off from the current collector was observed; and additionally, the electrode sheet was taken out, the electrolyte solution on the surface was gently sucked off with a dust-free paper, and it was immediately weighed as m1;

Swelling ratio of electrode sheet = (m1=m0)/m0×100%; and the smaller the swelling ratio data of the electrode sheet, the better the electrolyte solution resistance.

### 2. Secondary battery testing

### (1) Cycling capacity retention rate testing

In a constant temperature environment of 25°C or 45°C, at 2.5V-3.65V, the secondary battery was charged at 1C to 3.65V, then charged at a constant voltage of 3.65V to a current of ≤0.05mA, allowed standing for 5min, and then discharged at 1C to 2.5V, the capacity was recorded as Dn (n=0,1,2...), and the above operation was repeated for 1000 cycles to determine the capacity retention rate.

### (2) Testing of reversible capacity recovery rate storing at 60°C

The secondary battery was charged at C/3 to 3.65V at room temperature, stored at a temperature of 60°C for 60 days, recovered to room temperature for 5 hours, discharged at C/3 to 2.5V, continually charged at C/3 to 3.65V, then discharged at C/3 to 2.5V cut-off, and discharge capacity ÷ rated capacity × 100% was calculated as the reversible capacity recovery rate storing at 60°C.

**Table 1**

| | Thermally crosslinked polymer | | | Thermal crosslinking agent | Epoxy resin, thermal crosslinki ng and usage amount ratio | Binder composition | | Electrode sheet drying temperatu re/°C | Oven dryingcrosslinki ng temperatu re/°C | Positive electrode sheet | | Secondary battery | | |
|---|---|---|---|---|---|---|---|---|---|---|---|---|---|---|
| | Brand | Numb er averag e molec ular weight /Da | Epoxy value | | | Viscosity/ mPa·s | Usage amoun t/% | | | Cracke d? powde r fell? | Swelling ratio of electrode sheet/% | Cycling capacity retention rate/% | | Revers ible capacit y recove ryrate storing at 60°C/ % |
| | | | | | | | | | | | | 25° C | 45° C | |
| Example 1 | ERS-172L | 580 | 0.34 | IPDA | 1:0.146 | 55000 | 2% | 50 | 100 | No | 14.6 | 902 | 85. 2 | 933 |
| Example 2 | E51 | 392 | 0.51 | IPDA | 1:0.146 | 6000 | 2% | 50 | 100 | No | 10.5 | 89.1 | 84. 1 | 92.1 |
| Example 3 | 0194 | 1700 | 0.12 | IPDA | 1:0.146 | Solid | 2% | 50 | 100 | Slightl y cracke d | 152 | 89.8 | 84. 9 | 927 |
| Example 4 | ERS-172L | 580 | 0.34 | IPDA | 1:0.146 | 55000 | 2% | 50 | 85 | No | 15.9 | 892 | 84. 3 | 922 |
| Example 5 | ERS-172L | 580 | 0.34 | IPDA | 1:0.146 | 55000 | 2% | 50 | 108 | No | 132 | 889 | 83. 5 | 91.8 |
| Example 6 | ERS-172L | 580 | 0.34 | MeH-HPA | 1:0.232 | 52000 | 2% | 50 | 100 | No | 143 | 90.1 | 85. 1 | 933 |
| Example 7 | ERS-172L | 580 | 0.34 | 2-ethyl-4-methylimida zole | 1:0.02 | 70000 | 2% | 50 | 100 | No | 13.4 | 899 | 85. 2 | 932 |
| Example 8 | ERS-172L | 580 | 0.34 | 2-ethyl-4-methylimida zole | 1:0.01 | 73000 | 2% | 50 | 100 | No | 15.0 | 902 | 85. 3 | 932 |
| Example 9 | ERS-172L | 580 | 0.34 | 2-ethyl-4-methylimida zole | 1:0.08 | 65000 | 2% | 50 | 100 | No | 15.2 | 902 | 85. 3 | 932 |
| Example 10 | ERS-172 | 1200 | 0.17 | 2-ethyl-4-methylimida zole | 1:0.02 | 80000 | 2% | 50 | 100 | No | 142 | 90.0 | 85. 2 | 933 |
| Example 11 | 6313-100 | 3000 | / | AIBN | 1:0.003 | 120000 | 2% | 30 | 100 | No | 14.8 | 90.1 | 85. 1 | 93.4 |
| Example 12 | 6311-100 | 2800 | / | AIBN | 1:0.003 | 45000 | 2% | 30 | 100 | No | 14.5 | 898 | 84. 9 | 93.1 |
| Example 13 | 61992 | 5000 | / | AIBN | 1:0.003 | 200000 | 2% | 30 | 100 | No | 15.7 | 90.0 | 85. 0 | 932 |
| Example 14 | ERS-172L | 580 | 0.34 | 2-ethyl-4-methylimida zole | 1:0.02 | 70000 | 2% | 50 | 100 | No | 133 | 902 | 85. 2 | 93.4 |
| Compara tive example 1 | / | | / | / | / | / | 2% | 130 | 100 | Yes | 163 | 879 | 82 1 | 903 |

By analyzing the data in Table 1, it can be seen that the electrode sheet prepared using the binder composition of the present application in each of the Examples did not show significant cracking and powder falling, and only a few Examples showed slight cracking, and the swelling ratio of the electrode sheet was low. Compared with Comparative example 1 using a conventional PVDF binder, both the flexibility and the swelling ratio of the electrode sheet are significantly improved, and thus the electrical performance of the secondary battery was also improved.

Compared with Example 1, the molecular weight of the thermally crosslinked polymer in Example 2 was lower, which led to a lower viscosity of the binder composition and insufficient bonding force to the current collector and the active materials, resulting in a slightly weaker battery cycling performance; and in Example 3, the molecular weight of the thermally crosslinked polymer was relatively large, the resulting binder composition was solid, and had insufficient flexibility, which resulted in slight cracking of the electrode sheet, and was unfavorable for crosslinking, so that the electrical performance of the battery was also decreased. Compared with Example 11, the viscosity of the binder composition in Example 12 was lower, and the bonding force to the current collector and the active material was slightly decreased, resulting in a slightly weaker battery cycling performance; and in Example 13, the molecules of the thermally crosslinked polymer were larger, the viscosity of the binder composition was too high, the flexibility was slightly reduced, which was unfavorable for crosslinking, so that the swelling ratio of the electrode sheet was increased, and the electrical performance of the battery was also decreased.

Compared with Example 1, the oven drying-crosslinking temperature in Example 4 was lower, which led to incomplete crosslinking, increased swelling ratio of the electrode sheet and decreased cycling performance of the battery; and in Example 5, the oven drying-crosslinking temperature was relatively high, resulting in partially closed pores of the separator and decreased battery performance.

Compared with Example 7, the amount of thermal crosslinking agent used in Example 8 was less, which led to incomplete crosslinking, decreased electrolyte solution resistance of the electrode sheet, increased swelling ratio and decreased cycling performance; and in Example 9, the amount of thermal crosslinking agent used was relatively large, which led to excess small molecule raw materials in the composition remaining on the electrode sheet, reducing the bonding strength and migrating into the electrolyte solution, so that the battery electrical performance was affected.

Example 14 showed that the binder composition of the present application was also applicable to the negative electrode.

The technical features of the above Examples can be combined arbitrarily. In order to make the description concise, not all possible combinations of the technical features in the above Examples are described. However, all the combinations of the technical features should be considered as falling within the scope described in this specification provided that they do not conflict with each other.

The above Examples only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the protection scope of the present application. Therefore, the scope of protection of the present application should be based on the appended claims.

## Claims

1. An electrode slurry, comprising an electrode active material, a binder composition and a solvent;
The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

2. The electrode slurry according to claim 1, wherein the binder composition is liquid at 25±0.5°C, and has a viscosity of ≥50000 mPa·s.

3. The electrode slurry according to any one of claims 1 to 2, wherein the thermally crosslinked polymer comprises an epoxy resin, and the thermal crosslinking agent comprises one or more of an imidazole-based curing agent, an anhydride-based curing agent and an amine-based curing agent.

4. The electrode slurry according to claim 3, wherein the imidazole-based curing agent comprises one or more of 2-ethyl-4-methylimidazole, 2,4-dimethylimidazole, 2-ethylimidazole, modified imidazole ThinkHard 90S and imidazole adduct ThinkHard23N;
The anhydride-based curing agent comprises one or more of methyl tetrahydrophthalic anhydride and methyl hexahydrophthalic anhydride.
The amine-based curing agent comprises isophorone diamine.

5. The electrode slurry according to any one of claims 1 to 4, wherein the number average molecular weight of the epoxy resin is 400 Da-1600 Da; and optionally, the number average molecular weight of the epoxy resin is 550Da-1200Da.

6. The electrode slurry according to any one of claims 1 to 5, wherein the epoxy value of the epoxy resin is 0.04-0.6; optionally, the epoxy value of the epoxy resin is 0.18-0.36.

7. The electrode slurry according to any one of claims 1 to 6, wherein the epoxy resin comprises one or more of a bisphenol A type epoxy resin, a bisphenol F type epoxy resin and a dimeric acid type epoxy resin.

8. The electrode slurry according to any one of claims 1 to 7, wherein the thermally crosslinked polymer comprises an epoxy resin, and the epoxy resin and the thermal crosslinking agent are used in an amount ratio satisfying any one of the following conditions (1) to (3):
(1) the thermal crosslinking agent comprises an imidazole-based curing agent, and the mass ratio of the epoxy resin to the imidazole-based curing agent is 1: (0.02-0.05);
(2) the thermal crosslinking agent comprises an anhydride-based curing agent, and the mass ratio of the epoxy resin to the anhydride-based curing agent is 1: (0.08-0.45);
(3) the thermal crosslinking agent comprises an amine-based curing agent, and the mass ratio of the epoxy resin to the amine-based curing agent is 1: (0.04-0.22).

9. The electrode slurry according to any one of claims 1 to 7, wherein the thermally crosslinked polymer comprises one or more of an acrylic-capped prepolymer and an acrylate-capped prepolymer, and the thermal crosslinking agent comprises one or more of azobisisobutyronitrile and benzoyl peroxide.

10. The electrode slurry according to claim 9, wherein the thermal crosslinking agent is used in an amount of 0.1%-1% by mass of the thermally crosslinked polymer.

11. The electrode slurry according to any one of claims 1 to 10, wherein the number average molecular weights of the acrylic-capped prepolymer and the acrylate-capped prepolymer are independently 2000 Da-10000 Da, respectively; and optionally, the number average molecular weights of the acrylic-capped prepolymer and the acrylate-capped prepolymer are independently 3000Da-6000Da, respectively.

12. The electrode slurry according to any one of claims 1 to 11, wherein the acrylic-capped prepolymer comprises one or more of an acrylic-capped polyurethane prepolymer, an acrylic-capped polyester prepolymer and an acrylic-capped silicone prepolymer.

13. The electrode slurry according to any one of claims 1 to 12, wherein the acrylate-capped prepolymer comprises one or more of an acrylate-capped polyurethane prepolymer, an acrylate-capped polyester prepolymer and an acrylate-capped silicone prepolymer.

14. The electrode slurry according to any one of claims 1 to 13, wherein the solvent comprises one or more of ethanol, ethyl acetate and butyl acetate.

15. An electrode sheet, comprising a current collector and an active layer arranged on at least one side of the current collector, wherein the active layer is prepared by drying a raw material comprising the electrode slurry described in any one of claims 1 to 14.

16. An electrode sheet, comprising a current collector and an active layer arranged on at least one side of the current collector, wherein the active layer comprises an electrode active material and a binder composition;
The binder composition comprises a thermally crosslinked polymer and a thermal crosslinking agent, wherein the thermally crosslinked polymer comprises one or more of an epoxy resin, an acrylic-capped prepolymer and an acrylate-capped prepolymer.

17. The electrode sheet according to any one of claims 15 to 16, wherein the binder composition is used in an amount of 0.8%-3.0% by mass of the active layer.

18. The electrode sheet according to any one of claims 15 to 17, wherein the electrode sheet comprises an insulating layer, which comprises the binder composition, and which is provided between the current collector and the active layer.

19. A preparation method of an electrode sheet, comprising the following steps:
Providing a current collector, coating the electrode slurry described in any one of claims 1 to 14 on at least one side of the current collector, drying and pressing.

20. The preparation method according to claim 19, wherein the drying is at a temperature of 30°C-70°C.

21. A secondary battery, comprising the electrode sheet described in any one of claims 16-18.

22. A preparation method of a secondary battery, comprising the following steps:
Winding a positive electrode sheet, a separator and a negative electrode sheet to obtain a battery cell, oven drying the battery cell at 95°C-105°C to obtain a dry battery cell, assembling the dry battery cell and injecting an electrolyte solution;
Wherein at least one of the positive electrode sheet and the negative electrode sheet is the electrode sheet described in any one of claims 16 to 18.

23. An electrical apparatus, comprising the secondary battery described in claim 21.
